Europäisches Patentamt

European Patent Office

Office européen des brevets

(19)

(11) Numéro de publication: **0 097 197**
**B1**

(12) **FASCICULE DE BREVET EUROPEEN**

(45) Date de publication du fascicule du brevet:
**10.07.85**

(51) Int. Cl.⁴: **C 05 F 3/00**

(21) Numéro de dépôt: **83900039.5**

(22) Date de dépôt: **10.12.82**

(86) Numéro de dépôt international:
**PCT/FR 82/00207**

(87) Numéro de publication internationale:
**WO 83/02112 (23.06.83 Gazette 83/15)**

(54) **SUBSTANCE ORGANIQUE NATURELLE POUR REGENERER LES VEGETAUX LIGNEUX.**

(30) Priorité: **15.12.81 FR 8123549**

(43) Date de publication de la demande:
**04.01.84 Bulletin 84/1**

(45) Mention de la délivrance du brevet:
**10.07.85 Bulletin 85/28**

(84) Etats contractants désignés:
**AT BE CH DE GB LI LU NL SE**

(56) Documents cités:
**BE - A - 858 517**
**DE - A - 1 957 733**
**FR - A - 1 016 534**
**FR - A - 1 548 649**
**NL - A - 6 902 007**

(73) Titulaire: **JEAN, Gilbert, 100 Rue Desmoulins Bâtiment A, F-26000 Valence (FR)**
Titulaire: **JEAN, Maurice, 100 Rue Desmoulins Bâtiment A, F-26000 Valence (FR)**

(72) Inventeur: **JEAN, Gilbert, 100 Rue Desmoulins Bâtiment A, F-26000 Valence (FR)**
Inventeur: **JEAN, Maurice, 100 Rue Desmoulins Bâtiment A, F-26000 Valence (FR)**

(74) Mandataire: **Schmitt, John, Cabinet John Schmitt 9, rue Pizay, F-69001 Lyon (FR)**

## Description

La présente invention concerne une substance naturelle résultant du mélange de matières organiques végétales et animales et susceptible de régénérer et/ou d'équilibrer et/ou de favoriser le développement des végétaux ligneux en particulier les arbres et les arbustes, mais non exclusivement.

Actuellement, pour accroîte le développement et le rendement des végétaux, on fertilise les sols où ils poussent au moyen d'engrais organiques, chimiques et autres, qui ont pour effet d'augmenter la quantité de principes utilisables par les plantes, soit en restituant à la terre les prélèvements et les pertes des éléments minéraux du sol dont les plantes se nourrissent, soit en lui apportant des éléments nutritifs qui lui faisaient défaut.

Le brevet belge BE-A-858 517 décrit une méthode de production de fumier pulvérulent qui est basée sur la fermentation de fumiers naturels et consiste à mélanger et broyer à plusieurs reprises de fumiers dits »chauds« avec des fumiers dits »froids«; le mélange est mis en tas à l'air libre et travaillé un certain nombre de fois; la fermentation est recherchée avec forte élévation de température, jusqu'à 80, 85°C; le fumier obtenu est un pulvérulent, granuleux et sec, il est légèrement acide et convient particulièrement aux plantes calcifuges qui ne peuvent pas vivre sur des sols calcaires; on modifie le degré d'acidité, enrichit ou équilibre le produit par l'adjonction judicieuse d'autres éléments, notamment par des matières organiques titrant au moins 1% d'azote organique; cet apport de matière organique azotée est également effectué pour activer la fermentation recherchée qui s'accompagne d'une haute élévation de température.

Tous ces engrais organiques, chimiques ou autres, s'ils sont mal utilisés et mal dosés peuvent engendrer des développements anarchiques et si les végétaux sont malades, ils ne les loignent pas bien au contraire ils accroissent leur déséquilibre, destabilisent leurs défenses et vont à l'encontre du but poursuivi.

A l'inverse, la substance objet de la présente invention a pour effet de rendre normal dans ses caractères et son développement tout arbre, arbuste ou végétal du même genre, atteint de maladie, de dégénérescence et de sous-développement, naturel ou provoqué.

Cette substance se caractérise par le fait qu'elle résulte de la combinaison d'un vieux fumier ayant déjà chauffé, ayant terminé sa fermentation et s'étant refroidi, avec un ensemencement de déjections fraîches de moutons qui ne peuvent pas être considérées comme du fumier car elles sont des déjections sans litière. L'apport, par petites quantités, de ces déjections animales fraîches au vieux fumier refroidi permet sa transformation sans élévation de température. Ce mélange est légèrement humidifié et mis aussitôt en vase clos, à l'abri de l'air, par exemple dans des sacs en matière plastique épaisse, hermétiquement obturés. Le mélange n'est plus jamais retravaillé. Il n'y a pas incorporation d'autre élément étranger, la température du mélange reste approximativement moyenne, stable et ambiante. La substance obtenue se présente sous la forme d'un terreau, est de couleur brune, sans odeur particulière, légèrement pâteuse et laisse échapper un jus noirâtre lorsqu'on l'arrose après l'avoir déposée sur le sol au pied du végétal à traiter.

Cette substance peut être avantageusement utilisée pour soigner les grands arbres malades, les haies de conifères, les arbres à feuilles caduques, les arbustes et autres végétaux ligneux, lors de leur culture, transplantation et plantation. Elle a une vocation médicamenteuse ayant pour effet de rendre les végétaux normaux dans leurs caractères et leur développement. Elle peut être utilisée pour favoriser le développement et la multiplication de cultures hors sol et dans des terrains où elles ne peuvent pas se développer naturellement.

Dans une espace de temps de un à deux jours, on aperçoit distinctement sur les arbres des changements très nets dans la végétation. Par exemple, les épines des conifères, si elles sont serrées, s'ouvrent et prennent un vert tendre, puis après cirent pafaitement; les branches deviennent plus dures, se redressent et la pousse tend à devenir normale.

Sur les thuyas et conifères en lame, on constate une augmentation de la coloration verte de la chlorophylle, une pousse rapide de quelques centimètres du bout des branches, avec un redressement de la pointe; les épines deviennent brillantes, les branches plus dures et la pousse se répartit mieux sur toute la hauteur de l'arbre avec un épaississement de l'intérieur.

Sur les arbres à feuilles caduques, on constate que les feuilles sont plus grosses, plus vertes, plus brillantes (si elles doivent l'être); la pousse est plus régulière, normale, sans trop de végétation et al fructification se fait même sans excès.

Dans tous les cas et en général l'application de cette substance apporte une nette amélioration à tous les végétaux et les ligneux (à maturité) surtout sur les points suivants:

— régularisation de la pousse,
— résistance à la sécheresse,
— résistance aux maladies,
— augmentation de la stabilité de l'arbre,
— augmentation de la couleur verte de l'arbre,
— renforcement de la vigueur des branches.

Quelque temps après l'application de la substance, on s'aperçoit que les racines des arbres (tilleul, magnolia, if, conifère) et autres arbustes se dirigent vers elle et s'y implantent.

Enfin, l'utilisation de cette substance permet d'envisager l'implantation de végétaux dans des endroits où ils ne poussaient pas naturellement.

## Revendications

1. Substance organique naturelle pour régénérer les végétaux, caractérisée par le fait qu'elle résulte de la combinaison d'un vieux fumier refroidi, ayant terminé sa fermentation, ensemencé de déjections fraîches de moutons sans litière, que ce mélange est légèrement humidifié et mis aussitôt en vase clos.

2. Substance suivant la revendication 1, caractérisée par le fait que le mélange est mis dans une enveloppe en plastique épais, parfaitement obturée.

3. Substance selon les revendications 1 et 2, caractérisée par le fait que le mélange humide mis en vase clos, est maintenu à température moyenne ambiante.

4. Substance suivant la revendication 1, caractérisée par le fait qu'elle se présente sous la forme d'un terreau de couleur noirâtre, légèrement pâteuse et sans odeur.

## Patentansprüche

1. Natürliche organische Substanz zur Regenerierung von Pflanzen, gekennzeichnet durch die Tatsache, daß sie aus einer Zusammensetzung von altem erkaltetem Stallmist, dessen Gärprozeß abgeschlossen ist, und Zusätzen frischen Schafdungs ohne Streu besteht, wobei diese Mischung leicht befeuchtet und sogleich in verschlossene Behälter verpackt ist.

2. Substanz entsprechend Patentanspruch 1, gekennzeichnet durch die Tatsache, daß die Mischung in eine dicke, absolut dichte Plastikhülle verpackt ist.

3. Substanz entsprechend Patentansprüchen 1 und 2, gekennzeichnet durch die Tatsache, daß die in verschlossenen Behältern verpackte, befeuchtete Mischung bei mittlerer Raumtemperatur gelagert wird.

4. Substanz entsprechend Patentanspruch 1, gekennzeichnet durch die Tatsache, daß sie die Form dunkelfarbiger, teigartiger und geruchloser Düngererde hat.

## Claims

1. A natural organic substance for regenerating plants, characterized by the fact that it results from the combination of old cooled manure, having finished its fermentation, seeded with fresh sheep excrement without litter, that this mixture is slightly dampened and immediately placed in an airtight container.

2. The substance according to claim 1, characterized by the fact that the mixture is placed in a thick, prefectly closed plastic envelope.

3. Substance according to claims 1 and 2, characterized by the fact that the dampened mixture placed in an airtight container is kept at an average ambient temperature.

4. Substance according to claim 1, characterized by the fact that it is in the form of a compost, blackish in color, slightly pasty and odorless.